# EUROPÄISCHE PATENTSCHRIFT

(11) **EP 1 785 609 B1**
(45) Veröffentlichungstag und Bekanntmachung des Hinweises auf die Patenterteilung: **21.12.2011**
(21) Anmeldenummer: 06021300.6
(22) Anmeldetag: 11.10.2006
(51) Int. Cl.: F02B 29/04, F28F 9/007, F28D 9/00, F28F 9/02

(54) **Wärmetauscher in Plattenbauweise, insbesondere Ladeluftkühler**
Plate heat exchanger, in particular charged air cooler
Échangeur de chaleur à plaques, en particulier refroidisseur d'air de suralimentation

(30) Priorität: 11.11.2005 DE 102005053924
(43) Veröffentlichungstag der Anmeldung: 16.05.2007
(73) Patentinhaber: Modine Manufacturing Company, Racine, Wisconsin 53403-2552 (US); VOLKSWAGEN AG, 38436 Wolfsburg (DE)
(72) Erfinder: Brost, Viktor, Dipl.-Ing., 72631 Aichtal (DE); Bazika, Denis, Dipl.-Ing., 73730 Esslingen (DE); Kloft, Manfred, Dipl.-Ing., 38154 Königslutter (DE); Deneke, Michael, 38120 Braunschweig (DE)
(74) Vertreter: Wolter, Klaus-Dietrich

(56) Entgegenhaltungen:
- EP-A- 1 522 811
- EP-A2- 0 242 063
- EP-A2- 1 464 908
- WO-A-2006/010463
- WO-A2-2005/001366
- FR-A1- 2 447 529
- GB-A- 1 129 924
- US-A- 4 474 162
- US-B1- 6 474 408

## Beschreibung

Die Erfindung betrifft einen Wärmetauscher in Plattenbauweise, mit einer Anschlussplatte, insbesondere einen Ladeluftkühler, der in einem Gehäuse angeordnet ist, in das die Ladeluft ein - und ausströmt und dabei den Ladeluftkühler durchströmt, wobei das Gehäuse eine Montageöffnung aufweist, in die der Ladeluftkühler mit seiner Anschlussplatte einsetzbar und zu befestigen ist.
Der beschriebene Ladeluftkühler ist aus der DE 199 02 504 A1 bekannt. Abgesehen von der konkreten Verwendung als Ladeluftkühler gehen die Merkmale des Wärmetauschers auch aus DE 38 15 070 C2 oder aus DE 42 23 423 hervor, der dort bevorzugt als Ölkühler zum Einsatz kommt.
In der DE 29 03 543 C2 wurde die Montageöffnung eines Ölkühler - Gehäuses mittels einer unabhängigen Verschlussplatte verschlossen, die dort nicht Teil des Ölkühlers ist. Der Ölkühler besitzt zwei Vorsprünge mit denen er in zwei domartige Auswölbungen des Gehäuses eingesetzt wird, damit die Position des Ölkühlers im Gehäuse festgelegt ist.

Ein aus Wärmetauscherplatten aufgebauter Ladeluftkühler, der eine Abschlussplatte aufweist und in einem Gehäuse angeordnet ist, ist ferner aus DE 43 07 503 A1 bekannt, ohne dass dort weitere Befestigungsmerkmale des Ladeluftkühlers im Gehäuse aufgezeigt wurden.
Weiterer Stand der Technik geht aus der US 4 474 162, aus der FR 2 447 529, aus der US 6 474 408 B1 sowie aus der WO 2006/010463A1 hervor, die zum Teil ebenfalls die Merkmale des Oberbegriffes aufweisen.
Einige Probleme ergeben sich dann, wenn beispielsweise aus Gründen des Leichtbaus ein Gehäuse vorhanden ist, welches im Vergleich zu denen im Bereich "Ölkühlung" auch relativ voluminös ist, so dass es im Betrieb des Motors leichter in Schwingungen und Vibrationen versetzt wird, zumal dann, wenn ein vergleichsweise schwerer Wärmetauscher im Inneren des Gehäuses vorhanden ist.
Die Aufgabe der Erfindung besteht darin, den Wärmetauscher mit den erwähnten Merkmalen derart weiterzubilden, dass er mit dem Gehäuse eine konstruktive Einheit bildet, die stabiler gegen Schwingungen und Vibrationen sein soll.
Die erfindungsgemäße Lösung erfolgt mit den Merkmalen des Anspruchs 1.
Der Körper des erfindungsgemäßen Wärmetauschers ist mit Befestigungsmitteln ausgestattet, die mit korrespondierenden Befestigungsmitteln im Inneren des Gehäuses zusammen wirken.

Zum Körper des Wärmetauschers kann im Sinne des vorliegenden Vorschlags eine Rahmenkonstruktion gehören, in der sich die Platten und Rippen des Wärmetauschers befinden.

Im Sinne des Vorschlags können auch Befestigungsmittel am Körper vorhanden sein, die nicht speziell zur Befestigung ausgebildet sind, die aber trotzdem eine Befestigung gestatten. Beispielsweise können innen an der Wand des Gehäuses elastische Klammern oder Haken ausgebildet sein, die beim Einsetzen des Wärmetauschers beispielsweise hinter der Grundplatte einrasten und die Befestigung bewirken.

Die Befestigungsmittel am Köper sind am Rand der Wärmetauscherplatten ausgebildet, die dazu einen entsprechend vergrößerten Überstand aufweisen. Diese Wärmetauscher sind besonders stabil gegen Schwingungen, da die Befestigungsmittel über den gesamten Körper des Wärmetauschers reichen.

Die Befestigungsmittel am Körper sind am Rand einer Grundplatte ausgebildet, die dazu einen entsprechenden Überstand aufweist. Dieser Wärmetauscher ist besonders für diejenigen Anwendungen geeignet, in denen ein geringeres Schwingungsniveau zu verzeichnen ist.

Die Platten sind von einem u-förmigen Rahmen umfasst und die Befestigungsmittel sind an den gegenüberliegenden Schenkeln des Rahmens ausgebildet. Es kann sich um an bestimmten Punkten ausgebildete Befestigungsmittel handeln

Im Inneren des Gehäuses sind Schlitze oder Haken als Befestigungsmittel ausgebildet, die in entsprechende Haken oder Schlitze am Körper des Wärmetauschers eingreifen.

Im Inneren des Gehäuses sind beispielsweise schwalbenschwanzartige Führungen ausgebildet in die schwalbenschwanzartige Vorsprünge eingreifen.

Der Rand der Grundplatte des Wärmetauschers oder der Rand des Rahmens kann ebenfalls als Befestigungsmittel ausgebildet sein, wobei der erwähnte Rand (Flansch) mit einer Nut oder Rinne, die innen an der Wand des Gehäuses ausgebildet ist, zusammenwirkt, dass heißt, der Rand wird in die Rinne eingesetzt.

Die Befestigungsmittel am Körper des Wärmetauschers sollen beim Einsetzen des Wärmetauschers in das Gehäuse in die korrespondierenden Befestigungsmittel im Inneren des Gehäuses eingreifen. Damit wird eine einfache, schnelle und sichere Montage bzw. Demontage des Wärmetauschers im Gehäuse zur Verfügung gestellt.
Die Erfindung wird anhand einiger Ausführungsbeispiele, die in den beiliegenden Figuren abgebildet sind, erläutert. Weitere möglicherweise auch wichtige Merkmale und Vorteile sind in der folgenden Beschreibung enthalten.

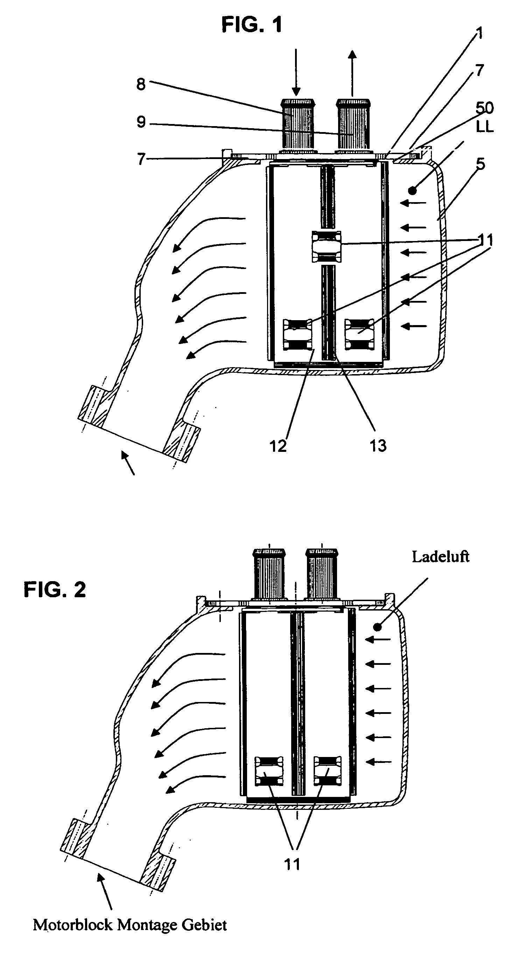

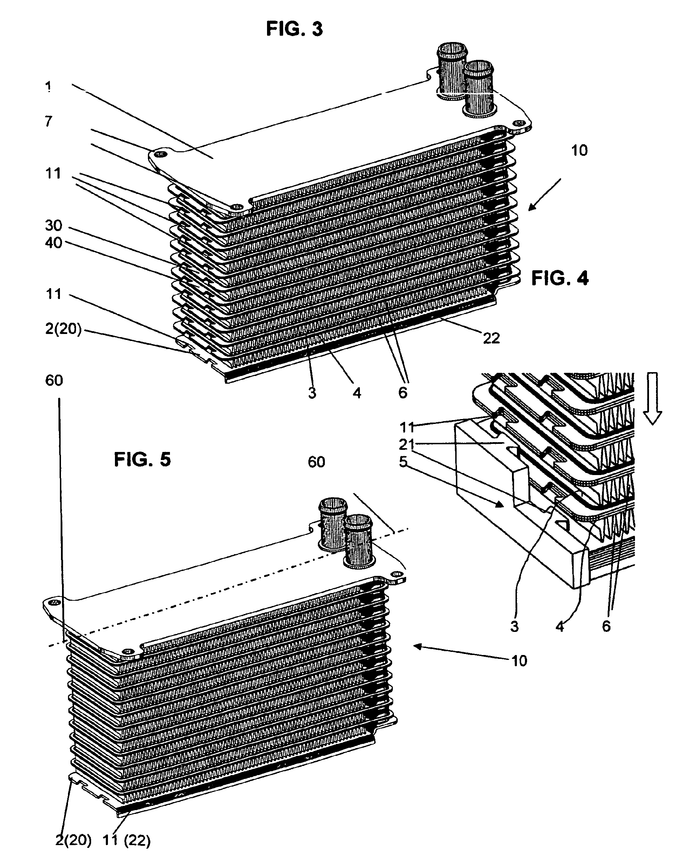

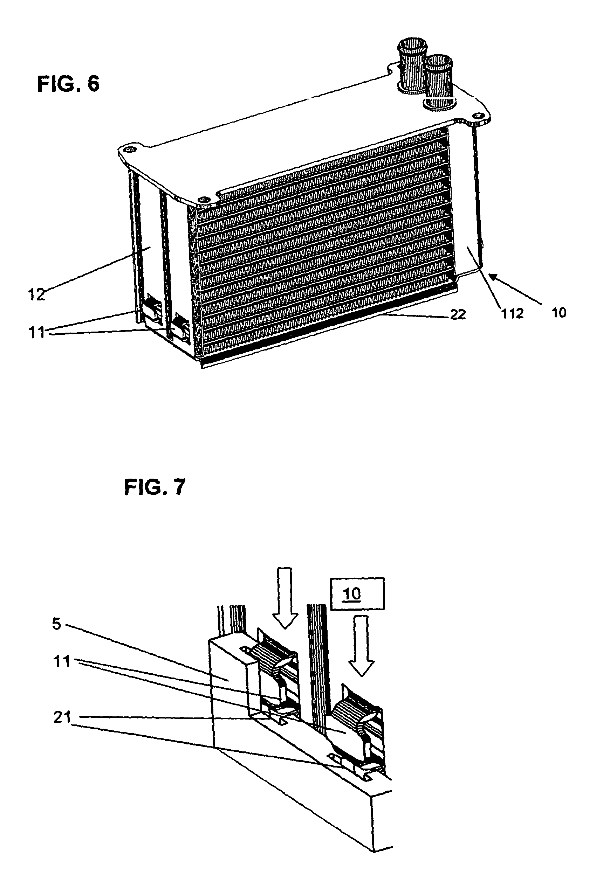

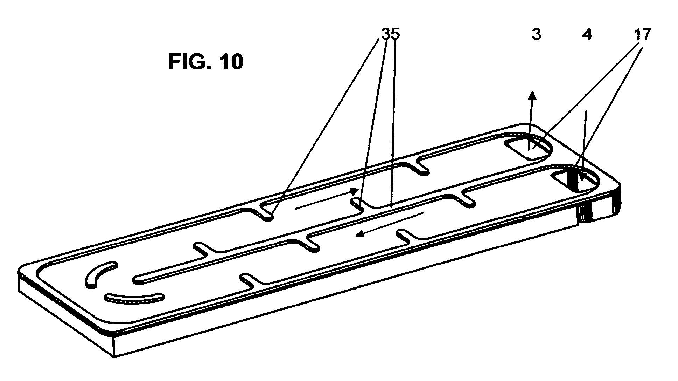

Die Fig. 1 und 2 zeigen einen Schnitt durch das Gehäuse, in dem sich der Wärmetauscher befindet. Die Fig. 3 zeigt einen Wärmetauscher in perspektivischer Ansicht, bei dem die Befestigungsmittel an Platten ausgebildet sind. Die Fig. 4 zeigt einen Ausschnitt aus der Fig. 3. Die Fig. 5 zeigt ebenfalls eine perspektivische Ansicht, wobei die Befestigungsmittel an einer Platte des Wärmetauschers ausgebildet sind. Die Fig. 6 - 9 zeigen verschiedene Ansichten eines Wärmetauschers, der sich in einem Rahmen befindet. Die Fig. 10 zeigt beispielsweise Platten des Wärmetauschers.

In den Ausführungsbeispielen handelt es sich bei dem Wärmetauscher um einen aus Platten 3, 4 aufgebauten Ladeluftkühler, der sich in einem - im vorliegenden Fall - aus Kunststoff bestehenden Gehäuse 5 befindet, bzw. der darin eingesetzt und befestigt wird. Das Gehäuse 5 ist vergleichsweise voluminös, da es sich dabei um den Luftansaugstutzen bzw. um den Luftansaugkanal einer nicht gezeigten Brennkraftmaschine handelt, durch den die von einem ebenfalls nicht gezeigten Kompressor bzw. vom Turbolader verdichtete und aufgrund des Verdichtungsvorgangs erhitzte Ladeluft hindurchströmt, um als Verbrennungsluft in die Zylinder der Brennkraftmaschine zu gelangen. Das Gehäuse 5 ist außerdem recht dünnwandig und nicht besonders stabil. Um den Füllungsgrad der Zylinder und somit die Wirksamkeit der Aufladung anzuheben, ist bekanntlich eine Kühlung der Ladeluft notwendig, die mittels des im Gehäuse 5 eingesetzten Ladeluftkühlers durchgeführt wird.

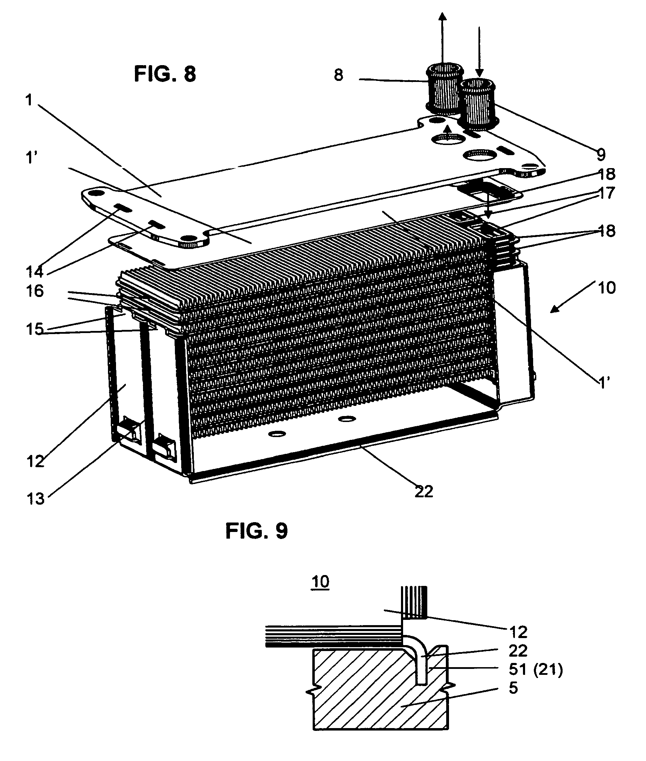

Der Ladeluftkühler weist eine Anschlussplatte **1** auf, die in den Eckbereichen seitlich über den Körper **10** des Wärmetauschers übersteht. Dort befinden sich Befestigungsöffnungen **7.** Der Körper **10** des Wärmetauschers, bestehend aus den Platten **3, 4** und den Rippen **6** wird innerhalb des Rahmens **12** zusammengesetzt Die Anschlussplatte **1** und die Anschlussstutzen **8, 9** für das flüssige Kühlmittel werden hinzugefügt. Der Rahmen **12** umgreift den Block aus den Platten **3, 4** und den Rippen **6** auf drei Seiten. Wie die Fig. 8 zeigt, befinden sich an den Enden der Schenkel des Rahmens **12** zwei Vorsprünge **15,** die in Schlitze **14** in der Anschlussplatte **1** eingreifen und die anschließend umgebogen werden, sodass der gesamte Körper **10** des Wärmetauschers zusammengehalten wird. Danach wird mittels Hartlötverfahren eine Verbindung zwischen allen erwähnten Teilen hergestellt. Der fertig hergestellte Wärmetauscher wird in die Montageöffnung **50** des Gehäuses **5** eingesetzt. Der Rand der Montageöffnung **50** korrespondiert mit der Form der Anschlussplatte **1** und ist entsprechend verstärkt worden, sodass mittels der erwähnten Befestigungsöffnungen **7** in der Anschlussplatte **1** bereits eine recht stabile Befestigung des Wärmetauschers vorgenommen werden kann, die das Gehäuse **5** bzw. die Montageöffnung **50** gleichzeitig luftdicht verschließt. Beim Einsetzen des Wärmetauschers greifen auch die Befestigungsmittel **11** am Körper **10** des Wärmetauschers in korrespondierende Befestigungsmittel **21,** die innen an der Wand des Gehäuses **5** ausgebildet sind, und sorgen somit für die nötige Stabilität der gesamten Konstruktion. Die Befestigungsmittel **11, 21** sind unterschiedlich ausgebildet. In der Fig. 1 sind Befestigungsmittel **11, 21** an drei Befestigungspunkten vorgesehen, die sich an beiden Schenkeln des Rahmens **12** befinden. Im Unterschied dazu sind in der Fig. 2 nur zwei Befestigungspunkte vorhanden. Da die Fig. 1 und 2 eine Seitenansicht des Wärmetauschers innerhalb eines Schnittes durch das Gehäuse **5** zeigen, ist nur einer der die zwei bzw. die drei Befestigungspunkte aufweisenden Schenkel des Rahmens **12** sichtbar. Die Befestigungsmittel **11,** sind in einem Fall als Haken ausgebildet, die in korrespondierende Ausnehmungen **21** in der Wand des Gehäuses **5** eingreifen, was in der Fig. 7 gezeigt ist. Die Fig. 6 und 8 zeigen weitere Einzelheiten desjenigen Wärmetauschers, der in der Fig. 2 im Einsatz ist, die jedoch auch für andere Einsatzfälle vorgesehen werden können. Eine Weiterbildung wurde hinsichtlich der Gestaltung des Rahmens **12** vorgenommen. Zunächst wurden die Schenkel des Rahmens **12** mit einer Längssicke **13** versehen, die nach innen, zu den Platten **3, 4** hin, ausgebildet ist. Am Rand **30, 40** der Platten **3, 4** wurde eine zur Form der Sicke **13** passende Reihe von Ausschnitten **16** angebracht. Es handelt sich hierbei um eine Montagehilfe, da sich der Plattenstapel einschließlich der Rippen **3** einfacher zusammensetzen lässt, wenn das seitliche Wegrutschen des Stapels verhindert wird. Das wird erreicht, weil die Sicke **13** in der Reihe von Ausschnitten **16** zu liegen kommt und somit das erwähnte Wegrutschen verhindert. Ferner kann man, wie die genannten Figuren 6 und 8 ebenfalls zeigen, den einen Schenkel des Rahmens **12 -** den rechten Schenkel in den Fig. 6 und 8 - weiterhin so ausbilden, dass der Strom der zu kühlenden Ladeluft auf den zentralen Bereich des Wärmetauschers gelenkt wird, wo sich die Rippen **6** befinden. Insbesondere die Fig. 8 lässt erahnen, dass der rechte Schenkel im Querschnitt etwa L - förmig ausgebildet ist. Diese Ausbildung vermeidet also, dass die Ladeluft bypassartig durch einen Bereich strömt, in dem die Effizienz des Wärmetausches nicht so gut ist. Wie die Figuren zeigen, handelt es sich dabei um den rechten Randbereich der Platten **3, 4,** in dem sich die Strömungsöffnungen **17** befinden. Der Rand der Strömungsöffnungen **17** ist bekanntlich so mit erhabenen Verformungen **18** versehen, dass innerhalb des Plattenstapels ein Eintrittssammelraum und ein Austrittssammelraum ausgebildet werden, die beide vertikal durch den Plattenstapel hindurchgehen. Bei den Platten **3, 4** handelt es sich jeweils um Plattenpaare, die bekanntlich durch zwei Platten **3, 4** gebildet sind, von denen eine um 180° um die Längsachse **60** gedreht und mit der anderen Platte unter Bildung eines Strömungsraumes zusammengesetzt wird. Die Platten **3, 4** sind vorzugsweise identisch und besitzen einen aufgerichteten Lötrand an dem die zwei Platten **3, 4** jedes Plattenpaares miteinander verbunden sind. Die erhabene Verformung **18** am Rand der Strömungsöffnungen **17** an der einen Platte des einen Plattenpaares liegt dann an der erhabenen Verformung **18** an der anderen Platte des benachbarten Plattenpaares an, wodurch die erwähnten Sammelräume gebildet werden. Die Höhe der erhabenen Verformungen **18** korrespondiert außerdem mit der halben Höhe der Rippen **6,** die jeweils zwischen zwei Plattenpaaren angeordnet sind. Die Fig. 8 zeigt die vorstehend beschriebene Ausbildung zumindest teilweise.

Aus der Fig. 8 geht ferner hervor, dass die Anschlussplatte **1** mehrteilig ausgebildet ist, im gezeigten Fall aus zwei Platten **1, 1'** besteht, die verbunden werden. Die an der äußeren Rippe **6** anliegende Teilplatte **1'** wird ebenfalls mit erhabenen Verformungen **18** versehen, die an den Verformungen **18** der benachbarten Platte **3,** bzw. **4** anliegen. Damit wird unter anderem der innere Druckverlust reduziert.

Die Platten **3, 4** besitzen Versickungen **35,** um das in den von den Plattenpaaren gebildeten Strömungsräumen strömende Kühlmittel in Turbulenz zu versetzen und um die u-förmige Durchströmung zu erzwingen, wie die Fig. 10 verdeutlichen soll. Der Strömungsweg der Ladeluft steht senkrecht zu dem des Kühlmittels, was zu einem effizienten Wärmeaustausch führt. (Kreuzgegenstrom)
In den Fig. 1 und 2 wurde die Strömung der Ladeluft durch Pfeile deutlich gemacht. Diese strömt durch eine nicht gezeigte Öffnung in das Gehäuse **5** ein und durch die zwischen den Plattenpaaren angeordneten Rippen **6** des Wärmetauschers hindurch, um gekühlt in die nicht gezeigten Zylinderräume der Brennkraftmaschine eintreten zu können.
Ein weiterer die Befestigung verbessernder Gedanke geht sowohl aus der Fig. 9 als auch aus der Fig. 3 hervor. Es ist in der Fig. 9 dargestellt worden, dass der Rahmen **12** einen abgekanteten Flansch **22** aufweisen kann, der auf seiner gesamten Länge in eine entsprechend ausgebildete Rinne **52** in der Wand des Gehäuses **5** eingreift. Solch ein Flansch **22** kann sich auch an einer Grundplatte **2** befinden, wie aus der Fig. 3 zu sehen ist, die ein Ausführungsbeispiel zeigt, in dem kein Rahmen **12** vorgesehen ist.
Die Fig. 3 und 4 zeigen ein Ausführungsbeispiel, welches besonders wirksam zur Unterdrückung von Schwingungen und Vibrationen ist, da die Befestigungsmittel **11, 21** über die gesamte Höhe des Wärmetauschers ausgebildet sind und ineinander greifen. Dort fehlt, wie erwähnt, der Rahmen **12.** Die Platten **3, 4** besitzen dafür einen verlängerten Rand **30** bzw. **40,** in dem die Befestigungsmittel **11** ausgebildet sind. Die Fig. 4 zeigt deutlich, wie die Befestigungsmittel **11** mit den Befestigungsmitteln **21,** die im Gehäuse 5 angeordnet sind, ineinander greifen. Es wurde in diesem Fall eine schwalbenschwanzartige Ausbildung der Befestigungsmittel **11, 21** vorgenommen.
In der Fig. 5 wurden Befestigungsmittel **11** lediglich am verlängerten Rand **20** der Grundplatte **2** des Wärmetauschers ausgebildet.
Die vorgeschlagene Befestigung des Ladeluftkühlers führt zu einem verbesserten Verhalten der Konstruktion gegenüber Schwingungen und Vibrationen. Das Gehäuse **5** selbst kann somit trotz des Vorhandenseins eines Wärmetauschers in seinem Inneren relativ leicht und dünnwandig und ohne wesentliche Versickungen in den Wänden ausgebildet werden.

## Patentansprüche

1. Wärmetauscher in Plattenbauweise (3, 4) mit einer Anschlussplatte (1), beispielsweise der in einem Gehäuse (5) angeordnet ist, in das Ladeluft ein - und ausströmt und den Wärmetauscher durchströmt, wobei das Gehäuse (5) eine Montageöffnung (50) aufweist, in die der Wärmetauscher einsetzbar und mit seiner Anschlussplatte (1) zu befestigen ist,
**dadurch gekennzeichnet, dass**
der Körper (10) des Wärmetauschers mit Befestigungsmitteln (11) ausgestattet ist, die mit korrespondierenden Befestigungsmitteln (21) im Inneren des Gehäuses (5) zusammen wirken, derart, dass die Befestigungsmittel (11) am Körper (10) des Wärmetauschers beim Einsetzen des Wärmetauschers in das Gehäuse (5) in die korrespondierenden Befestigungsmittel (21) an der Innenwand des Gehäuses (5) eingreifen.

2. Wärmetauscher nach Anspruch 1, **dadurch gekennzeichnet, dass** die Befestigungsmittel (11) am Rand (30, 40) der Wärmetauscherplatten (3, 4) ausgebildet sind.

3. Wärmetauscher nach Anspruch 1, **dadurch gekennzeichnet, dass** die Befestigungsmittel (11) am Rand (20) einer Grundplatte (2) ausgebildet sind.

4. Wärmetauscher nach Anspruch 1, **dadurch gekennzeichnet, dass** die Platten (3, 4) von einem zum Körper (10) gehörenden Rahmen (12) umfasst sind und die Befestigungsmittel (11) am Rahmen (12) ausgebildet sind.

5. Wärmetauscher nach Anspruch 4, **dadurch gekennzeichnet, dass** der Rahmen (12) u-förmig ist, und dass die Befestigungsmittel (11) an den beiden gegenüberliegenden Schenkeln des Rahmens (12) ausgebildet sind.

6. Wärmetauscher nach Anspruch 4 und 5, **dadurch gekennzeichnet, dass** die Schenkel des Rahmens (12) Vorsprünge aufweisen, die in Schlitze der Anschlussplatte (1) eingreifen, und das Positionierungsmittel an den Schenkeln und den Plattenrändern (30, 40) ausgebildet sind.

7. Wärmetauscher nach einem der vorstehenden Ansprüche, **dadurch gekennzeichnet, dass** im Inneren des Gehäuses (5) Schlitze oder Haken ausgebildet sind, in die entsprechende Haken oder Schlitze am Körper des Wärmetauschers eingreifen.

8. Wärmetauscher nach einem der vorstehenden Ansprüche, **dadurch gekennzeichnet, dass** im Inneren des Gehäuses (5) beispielsweise schwalbenschwanzartige Führungen oder Vorsprünge ausgebildet sind, die in schwalbenschwanzartige Vorsprünge oder Führungen am Körper (10) des Wärmetauschers eingreifen.

9. Wärmetauscher nach einem der vorstehenden Ansprüche, **dadurch gekennzeichnet, dass** die Anschlussplatte als Doppelplatte ausgebildet ist.

## Claims

1. Heat exchanger of the plate type (3, 4), with a connecting plate (1), which heat exchanger is arranged in a housing (5) in which, for example, charged air flows in and out and flows through the heat exchanger, the housing (5) having a mounting orifice (50), into which the heat exchanger can be inserted and is to be fastened to its connecting plate (1), **characterized in that** the body (10) of the heat exchanger is equipped with fastening means (11) which cooperate with matching fastening means (21) inside the housing (5), in such a way that the fastening means (11) on the body (10) of the heat exchanger, when the heat exchanger is inserted into the housing (5), engage into the matching fastening means (21) on the inner wall of the housing (5).

2. Heat exchanger according to Claim 1, **characterized in that** the fastening means (11) are formed at the margin (30, 40) of the heat exchanger plates (3, 4).

3. Heat exchanger according to Claim 1, **characterized in that** the fastening means (11) are formed at the margin (20) of a baseplate (2).

4. Heat exchanger according to Claim 1, **characterized in that** the plates (3, 4) are surrounded by a frame (12) belonging to the body (10), and the fastening means (11) are formed on the frame (12).

5. Heat exchanger according to Claim 4, **characterized in that** the frame (12) is U-shaped, and **in that** the fastening means (11) are formed on the two opposite legs of the frame (12).

6. Heat exchanger according to Claims 4 and 5, **characterized in that** the legs of the frame (12) have projections which engage into slots of the connecting plates (1), and the positioning means are formed on the legs and the plate margins (30, 40).

7. Heat exchanger according to one of the preceding claims, **characterized in that**, inside the housing (5), slots or hooks are formed, into which corresponding hooks or slots on the body of the heat exchanger engage.

8. Heat exchanger according to one of the preceding claims, **characterized in that**, inside the housing (5), for example, dovetail-like guides or projections are formed, which engage into dovetail-like projections or guides on the body (10) of the heat exchanger.

9. Heat exchanger according to one of the preceding claims, **characterized in that** the connecting plate is designed as a double plate.

## Revendications

1. Echangeur de chaleur à plaques (3, 4) avec une plaque de raccordement (1), qui est disposé dans une enceinte (5), dans laquelle par exemple de l'air d'admission entre et sort et parcourt l'échangeur de chaleur, dans lequel l'enceinte (5) présente une ouverture de montage (50), dans laquelle l'échangeur de chaleur peut être introduit et doit être fixé avec sa plaque de raccordement (1), **caractérisé en ce que** le corps (10) de l'échangeur de chaleur est muni de moyens de fixation (11), qui coopèrent avec des moyens de fixation correspondants (21) à l'intérieur de l'enceinte (5), de telle manière que les moyens de fixation (11) sur le corps (10) de l'échangeur de chaleur s'engagent dans les moyens de fixation correspondants (21) sur la paroi intérieure de l'enceinte (5) lors de l'introduction de l'échangeur de chaleur dans l'enceinte (5).

2. Echangeur de chaleur selon la revendication 1, **caractérisé en ce que** les moyens de fixation (11) sont formés sur le bord (30, 40) des plaques d'échangeur de chaleur (3, 4).

3. Echangeur de chaleur selon la revendication 1, **caractérisé en ce que** les moyens de fixation (11) sont formés sur le bord (20) d'une plaque de base (2).

4. Echangeur de chaleur selon la revendication 1, **caractérisé en ce que** les plaques (3, 4) sont entourées par un cadre (12) faisant partie du corps (10) et les moyens de fixation (11) sont formés sur le cadre (12).

5. Echangeur de chaleur selon la revendication 4, **caractérisé en ce que** le cadre (12) est en forme de U et **en ce que** les moyens de fixation (11) sont formés sur les deux branches opposées du cadre (12).

6. Echangeur de chaleur selon la revendication 4 et 5, **caractérisé en ce que** les branches du cadre (12) présentent des saillies, qui s'engagent dans des fentes de la plaque de raccordement (1), et **en ce que** des moyens de positionnement sont formés sur les branches et les bords de plaques (30, 40).

7. Echangeur de chaleur selon l'une quelconque des revendications précédentes, **caractérisé en ce que** des fentes ou des crochets sont formé(e)s à l'intérieur de l'enceinte (5), dans lesquels/lesquelles s'engagent des crochets ou des fentes correspondant(e)s sur le corps de l'échangeur de chaleur.

8. Echangeur de chaleur selon l'une quelconque des revendications précédentes, **caractérisé en ce que** des guides ou des saillies, par exemple en queue d'aronde, sont formé(e)s à l'intérieur de l'enceinte (5), et s'engagent dans des saillies ou des guides en queue d'aronde sur le corps (10) de l'échangeur de chaleur.

9. Echangeur de chaleur selon l'une quelconque des revendications précédentes, **caractérisé en ce que** la plaque de raccordement est réalisée sous la forme d'une plaque double.
